# EUROPEAN PATENT SPECIFICATION

(11) **EP 1 743 729 B1**
(45) Date of publication and mention of the grant of the patent: **10.08.2011**
(21) Application number: 06253391.4
(22) Date of filing: 29.06.2006
(51) Int. Cl.: B23K 26/34, F01D 5/00, B23P 6/00, F01D 5/28, C22C 29/18, C22C 27/02, C23C 24/10, C23C 26/02, B23K 26/14, B23K 101/00

(54) **Niobium silicide-based turbine component with composition graded portions ; method of modifying such turbine component**
Niobium silicide Turbinekomponent mit Komposition geändertem Teil ; Verfahren zum Ändern solches Komponentes
Composant de turbine en Niobium Silicides ayant une partie avec une composition différente ; Méthode pour modifier un tel composant

(30) Priority: 30.06.2005 US 172390
(43) Date of publication of application: 17.01.2007
(73) Proprietor: GENERAL ELECTRIC COMPANY, Schenectady, NY 12345 (US)
(72) Inventor: Bewlay, Bernard Patrick, Schenectady, NY 12309 (US); Cretegny, Laurent, Niskayuna, NY 12309 (US); Young, Craig Douglas, Clifton Park, NY 12065 (US); Azer, Magdi N., Niskayuna, NY 12309 (US); Ritter, Ann Melinda, Niskayuna, NY 12309 (US)
(74) Representative: Bedford, Grant Richard

(56) References cited:
- EP-A2- 1 229 146
- JP-A- 2001 269 784
- US-A- 5 640 767
- US-A- 5 690 472
- US-A1- 5 837 960
- US-A1- 2002 098 298
- US-A1- 2004 126 237
- US-A1- 2004 126 266
- US-B1- 6 428 910

## Description

This invention relates generally to metals and metal alloys used in high temperature applications. More specifically, the invention relates to a turbine component formed from a niobium-silicide based composition according to the preamble of claim 1 (see, for example, US 2004/126 266), which are useful for a variety of turbine engine components.

Equipment used in high temperature applications can be made from a variety of high-performance alloys. Choice of a particular alloy depends in large part on the projected temperature-exposure of the component, along with other specified requirements for the component. They include: strength, creep resistance, wear resistance, oxidation resistance, environmental resistance, weight requirements, and the like. Gas turbine engines are a good example of how the many alloy properties need to be balanced throughout a single (albeit complex) piece of equipment. In a typical gas turbine engine, air is compressed in a compressor and mixed with fuel and ignited in a combustor for generating hot combustion gases. The gases flow downstream through a high pressure turbine (HPT) having one or more stages, including a turbine nozzle and rotor blades. The gases then flow to a low pressure turbine (LPT), which typically includes multi-stages with respective turbine nozzles and rotor blades. Metal temperatures in the "hot" sections of the turbine may be as high as about 1150°C during operation.

While nickel-based superalloys are often the materials of choice for the high-temperature sections of the turbine, there is a great deal of interest in advanced materials which can withstand even higher operating temperatures. Examples of the relatively new alloys are the refractory metal intermetallic composite (RMIC) materials. Many of these are based on niobium (Nb) and silicon (Si), and are described in a number of patents mentioned below.

The RMIC composites usually have a multi-phase microstructure. For example, the microstructure may comprise a metallic Nb-base phase and one or more intermetallic metal silicide phases. As described in U.S. Patent 5,833,773 (Bewlay et al), the metal silicide phase sometimes includes an M₃Si silicide and an M₅Si₃ silicide, where M is Nb, Ti (titanium) or Hf (hafnium). The materials are considered to be composites that combine high-strength, low-toughness silicides with a lower-strength, higher-toughness Nb-based metallic phase. They often have melting temperatures of up to about 1700°C, and possess a relatively low density as compared to many nickel alloys. These characteristics make such materials very promising for potential use in applications in which the temperatures exceed the current service limit of the nickel-based superalloys.

Turbine blades for the gas turbine engines mentioned above represent a good example of how difficult it can be to balance alloy properties in a single article. Portions of the blade, such as the airfoil, often require a relatively high degree of strength and "creep" resistance. However, adjustment of the composition to satisfy these requirements is sometimes achieved only at the expense of other properties. For example, the oxidation resistance of the alloy may decrease, which can be problematic for other portions of the blade, such as the blade tip.

Turbine blades (as well as other types of high temperature equipment) can be made by a variety of techniques, such as forging, investment casting, and machining. However, these processes can be complicated and expensive. For example, obtaining the exact, specified blade shape can require many individual steps, which usually conclude with time-consuming machining steps, to provide the final geometric configuration.

Moreover, in order to attach the blades to a rotor or disk in a given turbine stage, the base of the blade usually must be formed into a dovetail or "fir-tree".

This process is usually carried out during a casting or forging step, with subsequent machining. Obtaining the proper dovetail geometry is also a complex endeavor, and often requires a large number of time-consuming, post-machining operations.

Furthermore, most turbine blades usually include hollow interior cooling regions, which channel a portion of air bled from the compressor. Typical hollow regions often include serpentine passages. Formation of these regions also requires complex procedures. For example, ceramic cores with very specific characteristics are usually employed during casting or directional solidification processes, to form the hollow passages. The cores must be strong enough to remain fully intact during the initial casting or solidification stage. They must also be "crushable" and leachable after the desired part is formed, i.e., as the surrounding metal shrinks. Formulating the proper core composition (especially when new types of alloys are being cast) is yet another challenge in efficiently manufacturing blades and other components by conventional techniques.

US2004/0126237 A1 discloses a turbine component comprising a substrate comprising a silicide-based material, an oxidation resistant silicide coating disposed at the surfaces of the substrate and a thermal barrier coating disposed at the silicide coating. US2004/0126266 A1 discloses a method of molding an article comprises inserting a mandrel into the cavity of the mold; placing a niobium based refractory metal intermetallic composite powder into a cavity of a mold; consolidating the niobium based refractory metal intermetallic composite around the mandrel; and chemically removing the mandrel from the composite.

With the above considerations in mind, it should be apparent that new developments in at least two areas would be welcome in the art. First, RMIC-based turbine components (as well as other high temperature components) having specific property characteristics which vary in different sections of the component would be of considerable value. Second, methods for making such components, which reduce or eliminate some of the steps required in conventional casting processes, would also be of considerable interest in the art.

One embodiment of this invention is directed to a turbine component formed from a niobium silicide-based composition;
wherein at least 75 weight % of the material forming the component comprises some form of niobium silicide composition,
the niobium silicide-based composition is compositionally-graded through at least a portion of the component;
the compositional grading of niobium silicide is a sequential or successive change in the amount of one or more constituents in the composition along a dimension of the turbine article;
at least a first portion of the component is compositionally-graded to exhibit greater oxidation resistance than an adjacent second portion of the component, under standard operating conditions;
the component comprises a turbine blade comprising:
(a) an airfoil;
(b) an airfoil tip region located at an outer end of the airfoil;
(c) a platform on which the airfoil is mounted; and
(d) a dovetail root attached to an underside of the platform, and having a shape adapted to fit into a slot on a turbine rotor, so that the blade can be attached to the rotor; and wherein the niobium silicide-based composition is a niobium silicide alloy and the composition of the niobium silicide alloy in the root portion of the turbine blade is different from the composition of the niobium silicide alloy in the tip portion of the blade, whereby the niobium silicide alloy in the dovetail root exhibits greater fracture toughness than the niobium silicide alloy in the airfoil, the amount of silicon present in the niobium silicide alloy in the dovetail root being less than about 9 atom %, based on total atomic percent; and the alloy comprising a metallic Nb-base phase and at least one metal silicide phase of the formula M₃Si or M₅Si₃, wherein M is at least one element selected from the group consisting of Nb, Hf, Ti, Mo, Ta, W, a platinum group metal, and combinations thereof.

Another embodiment relates to a method of modifying a turbine component according to the preceding paragraph, comprising the step of applying additional material which comprises a niobium silicide to at least a portion of the turbine component, according to a designated pattern, so that the turbine component is modified according to shape, composition, or a combination of shape and composition.

Other features and advantages of the present invention will be more apparent from the following detailed description of the invention, in which:
FIG. 1 is a perspective view of a turbine engine blade, including the airfoil, platform, and dovetail root.
FIG. 2 is an enlarged, cross-sectional view of the turbine engine blade, taken along line 2-2 of FIG. 1.
FIG. 3 is a schematic illustration of a laser cladding process.
FIG. 4 is a detailed, schematic illustration of a laser cladding apparatus.
FIG. 5 is an illustration of a multiple feed nozzle system for delivering powder in a laser cladding apparatus.

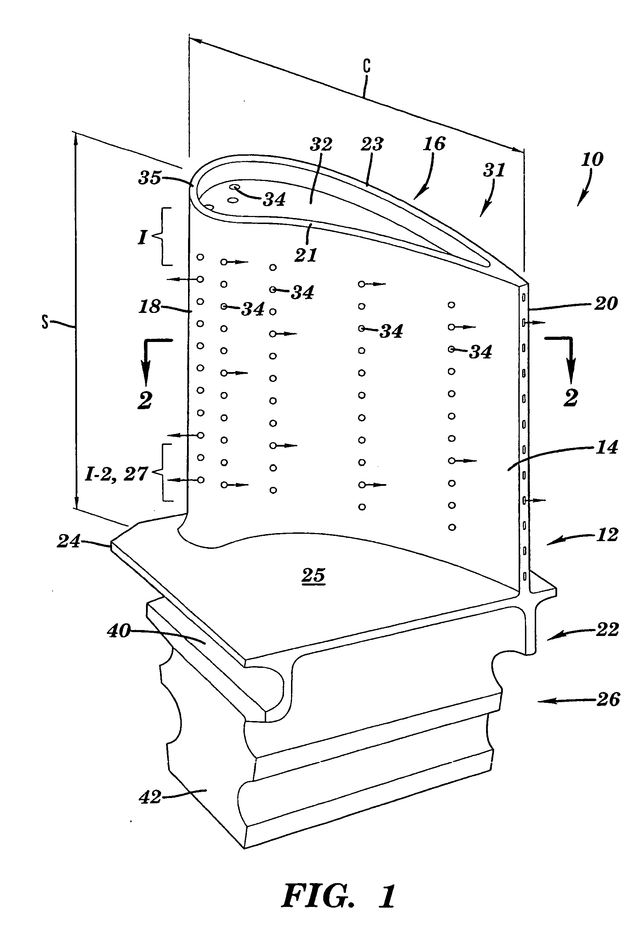

FIG. 1 is a perspective view of an exemplary gas turbine engine rotor blade 10. Turbine blades of this type are well-known in the art. Non-limiting examples include various blade designs described in U.S. Patents 5,458,461 (C. P. Lee et al) and 5,690,472 (C.P. Lee), which are incorporated herein by reference. Usually, a plurality of such blades are attached to an annular rotor disk (not shown). Blade 10 includes an airfoil 12, having pressure and suction sides 14, 16, and leading and trailing edges 18, 20, respectively. The sidewalls 21 and 23 of the airfoil define the pressure and suction sides 14 and 16. The sidewalls are generally opposite each other in a plane with a vertical dimension of the airfoil.

The lower part of the airfoil in FIG. 1 terminates with a base 22. Base 22 includes a platform 24, on which the airfoil can be rigidly mounted in upright position, i.e., substantially vertical to the top surface 25 of the platform. The base further includes a dovetail root 26, which is attached to an underside of the platform. The dovetail root is designed to attach blade 10 to the rotor. As further described below, the dovetail root, platform, and airfoil can be cast (usually as one piece), or can be formed separately, and then mechanically or metallurgically joined together. Alternatively, they can be formed in a laser deposition process, as also described in the remainder of the specification.

As depicted in FIG. 1, the vertical dimension "S" represents the "height" or span of the airfoil, extending from the top surface 25 of platform 24, to the uppermost portion of airfoil tip 31. As those skilled in the art understand, the airfoil tip can be formed in a variety of shapes. In the present instance, tip 31 terminates with end cap 32. The end cap closes the outer ends of sidewalls 21 and 23. (in other designs, the tip may actually be covered by a shroud). The cross-wise dimension "C" represents the chord of the airfoil. The chord dimension is generally perpendicular to the span dimension, and extends from the extreme points of leading and trailing edges 18, 20.

As is well-understood in the art, turbine blades like that depicted in FIG. 1 typically contain extensive hollow regions between sidewalls 21 and 23. The hollow regions serve primarily to allow the passage of coolant air through the blade. As shown in the figure, the sidewalls, leading and trailing edges, and end cap contain a number of small cooling holes or apertures 34. These holes permit passage and exit of cooling air from the interior of the blade airfoil 12. The cooling air usually flows into and upwardly through the base 22 to the airfoil. As further mentioned below, extensive, sophisticated channels for coolant air can be incorporated into the interior of the airfoil. These channels permit the air to exit the apertures according to calculated patterns of velocity and geometry, thereby providing critical cooling to the exterior of the blade during operation.

As mentioned previously, blades and other turbine components for this invention are formed from a niobium silicide-based composition. In general, such compositions contain niobium (Nb), silicon (Si), and at least one element selected from the group consisting of titanium (Ti), hafnium (Hf), chromium (Cr), and aluminum (Al). Such compositions usually have a microstructure which includes both a metallic niobium-base phase and a metal silicide phase. According to the present invention, it is contemplated that at least about 75 weight % of the material forming the turbine component comprises some form of a niobium silicide composition. As used herein, the term "niobium silicide-based" is meant to denote this compositional parameter, and is sometimes referred to as a "niobium silicide material", for the sake of brevity.

The turbine blade for certain embodiments of this invention may contain different niobium silicide compositions in different locations, e.g., the airfoil, airfoil tip region (discussed below), platform, and dovetail root. The particular niobium silicide composition for a given location will depend on a number of factors. They include the projected temperature-exposure for that section of the blade, as well as specific requirements for the following properties: strength, ductility, toughness, creep resistance ("creep strength"), oxidation resistance, corrosion resistance, fatigue properties, environmental resistance, weight requirements, and the like. Selection of a specific composition depends on the particular properties desired for a portion of the component under standard operating conditions. As used herein, the term "standard operating conditions" refers to the typical conditions of use for a component, in terms of temperature range, temperature cycles, corrosion conditions, tensile loads, thermally-induced stresses, centrifugal stresses, and various other conditions well-known to those skilled in the art.

Examples of compositions suitable for airfoil 12 are found in U.S. Patents 6,409,848 (Bewlay et al) and 6,419,765 (Jackson et al). A non-limiting example of such a composition comprises: between about 14 atomic % and about 26 atomic % titanium; between about 1 atomic % and about 4 atomic % hafnium; up to about 6 atomic % tantalum; between about 12 atomic % and about 22 atomic % silicon; up to about 5 atomic % germanium; up to about 4 atomic % boron; between about 7 atomic % and about 14 atomic % chromium; up to about 3 atomic % iron; up to about 2 atomic % aluminum; between about 1 atomic % and about 3 atomic % tin; up to about 2 atomic % tungsten; up to about 2 atomic % molybdenum; and a balance of niobium. In some cases, the ratio of the sum of atomic percentages of niobium and tantalum to the a sum of atomic percentages of titanium and hafnium has a value between about 1.4 and about 2.2. Moreover, in some preferred embodiments, the niobium silicide alloy in the airfoil exhibits greater creep resistance than the niobium-silicide alloy of the airfoil tip region, under standard operating conditions.

One illustration of the benefits of employing specific niobium silicide compositions in specific locations relates to the airfoil tip region of the turbine airfoil. In general, the "tip region" is the portion of the airfoil which is adjacent airfoil tip 31. As used herein, the tip region can more specifically be defined as the region extending downward (along span "S") from top edge 35, to a point which is about 50% to about 75% of the dimension "C" of the chord.

The tip region of the turbine blade is often subjected to a great deal of wear. For example, the tip may be abraded when it rubs up against the shroud of a casing in which the turbine blade rotates. Thus, in some embodiments, it is very desirable that the niobium silicide composition of the tip region exhibit greater wear resistance, as compared to the niobium silicide composition used in other parts of the blade. The compositions may thus comprise alloy constituents which enhance wear resistance, such as titanium carbide or tungsten carbide. Cobalt-based alloys are also useful for wear resistance. Non-limiting examples include those which comprise cobalt, and at least one of chromium, tungsten, nickel, iron, molybdenum, and silicon. Some of these are referred to as Stellite™ alloys or Tribaloy™ alloys.

In other embodiments, it is desirable that the tip region comprise a niobium silicide material with enhanced oxidation resistance. Many compositions of this type are known in the art. Non-limiting examples are provided in U.S. Patents 5,942,055 (Jackson et al) and 5,932,033 (Jackson et al). The oxidation-resistant compositions often contain significant amounts of a silicon-modified Laves phase, i.e., an amount greater than that which would be in the niobium silicide composition which forms the remainder of the turbine airfoil. One specific example of a suitable composition is a silicide-based composite which contains a silicide intermetallic phase, a niobium-based metallic phase, and a silicon-modified Cr₂M Laves phase; where M is at least Nb. The composition comprises, in atomic percent, about 12 to about 25% titanium; about 6 to about 12% hafnium; about 15 to about 25% chromium; about 1 to about 8% aluminum; and about 12 to about 20% silicon, with a balance of niobium. The niobium-based metallic phase functions, in part, to toughen the overall composition, while the Laves phase is important for enhancing oxidation resistance at elevated temperatures.

Another specific example of an oxidation-resistant composition for the tip region is a silicide-based composite, again containing the three phases noted above. In this instance, the silicide intermetallic phase usually comprises M₅Si₃ or M₃Si, where M is Nb+Ti+Hf. The silicon-modified Laves phase is typically Cr₂M, where M is also Nb+Ti+Hf. Compositions of this type preferably contain greater than about 25 volume % of the niobium-based metallic phase. One specific composition comprises, in atomic percent: about 30 to about 44% niobium, about 17 to about 23% titanium, about 6 to about 9% hafnium, about 11 to about 20% chromium, about 2 to about 13% aluminum; and about 13 to about 18% silicon.

While the airfoil and the airfoil tip region often comprise niobium silicide compositions which are distinct from each other, the compositions are often graded. Compositional grading provides a smoother transition between the different regions of the turbine blade. As used herein and according to the present invention, a "gradation" is meant to denote any sequential or successive change in the amount of one or more constituents in the composition, along a dimension of the turbine article. That degree of change-per-unit of dimension can vary widely. Moreover, the gradation need not occur over the entire dimension, and may instead take place over a very specific region, e.g., an interface between two adjacent regions of a turbine blade. As further described below, the gradation may occur in a number of directions, e.g., along the span or chord-wise dimensions of the airfoil, or through the thickness of the airfoil wall. The gradation may also occur in a number of independent locations in a given turbine article.

With reference to FIG. 1, an interface region "I" between airfoil 12 and airfoil tip region 31 is depicted. The length of the interface region along the airfoil span ("S") can vary considerably, depending in part on the factors set out previously, e.g., temperature exposure and property requirements. Usually, the interface has a length which is about 1% to about 25% of the length of the span.

Thus, in grading the niobium silicide composition, the amount of constituents which promote oxidation resistance or wear resistance can be gradually increased through the interface "I", in a direction from the main portion of airfoil 12, toward the airfoil tip region 31. For example, the amount of the silicon-modified Laves phase in the interface, as a proportion of the total niobium-silicide-based composition, could be increased. As a non-limiting illustration, the volume percentage of the silicon-modified Laves phase in the interface "I", as a portion of the total niobium-silicide-based composition, could increase in pre-selected increments through the dimension of the interface, in a direction toward the airfoil tip region. Although compositional grading could continue upward, i.e., to the actual upper terminus of the tip, the bulk of the tip region is usually not graded, and is formed of a relatively uniform composition. Similarly, while compositional grading could continue downward, i.e., along the entire span, most of the airfoil would usually comprise a relatively uniform niobium silicide composition.

Other illustrations can be provided for the use of different niobium silicide compositions in different locations of the turbine blade. As an example with reference to FIG. 1, platform 24 and dovetail root 26 are not usually exposed to the high temperature gases which impact airfoil 12 and tip 31 during service. Thus, the use of niobium silicide compositions which exhibit a high level of oxidation resistance and/or high-temperature strength may not be critical for these sections of the blade. Instead, the platform and dovetail root, according to the present invention, benefit from niobium silicide compositions which provide enhanced mechanical performance at intermediate temperatures, e.g., operating temperatures of about 500°C to about 1000°C. As used in this context, "mechanical performance" is meant to include toughness (e.g., fracture toughness), ductility, creep resistance, and intermediate temperature strength.

Various niobium silicide compositions can provide the platform and dovetail root with enhanced mechanical performance. Some of them are described in co-pending patent application S.N. 11/029,666 (B. Bewlay et al), filed on December 31, 2004, assigned to the assignee of the present application. For these materials and according to the present invention, the amount of silicon present is less than about 9 atom %, based on total atomic percent for the composition. The compositions typically comprise a metallic Nb-base phase and at least one metal silicide phase of the formula M₃Si or M₅Si₃, wherein M is at least one element selected from the group consisting of Nb, Hf, Ti, Mo, Ta, W, a platinum group metal, and combinations thereof.

A non-limiting, specific example of such a composition, suitable for the dovetail root and platform, comprises niobium and:
about 5 atom % to about 45 atom % titanium;
about 1 atom % to about 20 atom % hafnium
about 1 atom % to about 25 atom % chromium;
about 1 atom % to about 20 atom % aluminum; and
about 0.5 atom % to about 8.5 atom % silicon.

These "low silicon" compositions often include up to about 20 atom % rhenium, based on total atomic percent. Examples of the other platinum group metals which may also be included are osmium (Os), iridium (Ir), platinum (Pt), ruthenium (Ru), rhodium (Rh), and palladium (Pd). In some embodiments, the compositions may induce other elements previously mentioned, such as tungsten (W), tantalum (Ta), and molybdenum (Mo). Rare earth metals may also be included, along with various other elements, e.g., boron (B), carbon (C), germanium (Ge), zirconium (Zr), vanadium (V), tin (Sn), nitrogen (N), iron (Fe), and indium (In). Exemplary levels for these elements are provided in the referenced patent application of Bewlay et al, S.N. 11/029,666.

The level of specific constituents may be further adjusted, to suit particular end use conditions. For example, in some embodiments where strength requirements for the platform are especially high, a preferred level of hafnium in the niobium silicide composition is about 5 atom % to about 10 atom %. Moreover, the level of silicon can be higher than in the "low silicon" compositions, e.g., up to about 20 atom %. As another example, enhanced oxidation resistance in the dovetail root section of a turbine blade under lower temperature conditions is sometimes required (e.g., at temperatures ranging from about 1100°F-1400°F (593°C-760°C). In such a case, the chromium level is preferably at least about 5 atom %. Alternatively, or in addition to the specified chromium level, the composition may further contain about 1 atom % to about 3 atom % tin. As further described below, the laser cladding process is especially suitable for adjusting the specific levels of these constituents during fabrication of the turbine component.

Those skilled in the art will be able to determine the most appropriate combination of elements for a given platform and dovetail root, based on the factors described previously. As an example, the inclusion of one or more of W, Ta, or Mo in the niobium silicide composition may be helpful in increasing the tensile strength of the metallic phase, and the creep strength of both the metallic phase and the intermetallic phase. However, their presence may also result in an alloy of higher density, which can sometimes be an important consideration. (It should also be understood that, while the platform and dovetail root are usually discussed together here, they may in fact each comprise different types of niobium silicide compositions, depending on the requirements for the turbine blade).

With reference to FIG. 1, the composition of airfoil 12 may abruptly change to the composition of platform 24, when different niobium silicide compositions are used for each part of the blade. Similarly, the composition of the platform may abruptly change to the composition of dovetail root 26. However, in preferred embodiments, there is at least some compositional grading between at least two of these components. For example, beginning with some lower portion 27 of the airfoil along span "S", (arbitrarily designated as interface "I-2"), the compositions may gradually change from one best suited for the airfoil to one best suited for the platform.

The length of interface "I-2" may vary considerably, depending on many of the factors used in determining the length of interface "I", discussed above. In general, interface I-2 has a length which is about 1% to about 25% of the span "S" dimension. In many cases, the length of interface I-2 is similar to the length of interface "I". Within that interface, the proportion of one or more constituents in the niobium silicide composition may decrease or increase, depending on the "target composition" in either direction.

In a similar manner, the composition of dovetail root 26 may also be graded. For example, compositional grading could take place along the same direction as span "S", e.g., from an upper portion 40 of the dovetail root to a lower portion 42. The grading could occur along a specific interface, similar to those described above (though with its own variation in length). Alternatively, the gradation could occur through the entire length (height) of the dovetail root, and/or through any other dimension as well.

As described above, the airfoil is typically formed from sidewalls which extend between and merge together with leading and trailing edge portions. As shown in FIG. 1, sidewalls 21 and 23 define the airfoil thickness in a dimension perpendicular to span S, from wall-to-wall. Hollow regions are usually located within most or all of the inner region between the sidewalls. The sidewalls themselves have a thickness which also depends on factors described previously, such as the required blade strength.

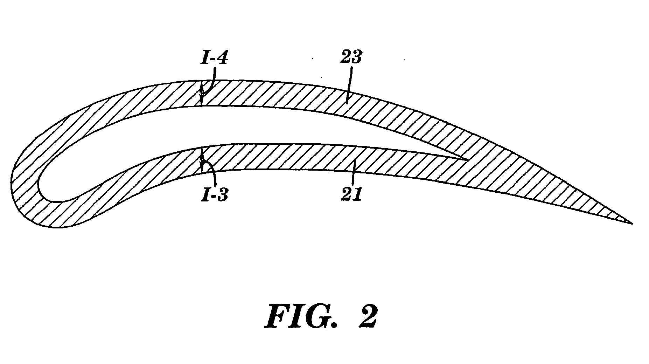

In some embodiments, it may be very beneficial to compositionally grade the thickness of one or both of the sidewalls. An example of this concept is provided in FIG. 2, which is an enlarged, cross-sectional view of the airfoil shown in FIG. 1. (In this figure, end cap 32 is not shown. Moreover, the thickness of the sidewalls has been exaggerated somewhat, for ease-of-description).

One situation in which compositional grading of the sidewalls may be advantageous relates to thermal expansion. As those skilled in the art understand, when an airfoil is exposed to high temperatures during operation, e.g., exposure to combustion gases, the temperature of the exterior airfoil walls may rise the most, while the temperature of the interior walls is substantially lower. This temperature gradient may cause greater expansion of the outer regions of the airfoil, as compared to the inner regions. The resulting stress can lead to thermal fatigue, and eventual damage to the airfoil. The fatigue can occur more quickly when the airfoil is exposed to a large number of temperature cycles. However, the stress due to this temperature gradient could be decreased or eliminated if the airfoil walls were graded, in terms of the niobium silicide composition.

With reference to FIG. 2, sidewall 21 could be compositionally graded along thickness I-3. Sidewall 23 could be compositionally graded along thickness I-4. In each instance, the composition could be changed so that constituents which affect the thermal expansion coefficient (CTE) would be increased or decreased. As a non-limiting example, increasing the proportion of elements like titanium or chromium in a niobium silicide composition can increase the CTE of the material. Thus, the proportion of such elements might be increased along thickness I-3, moving from the exterior to the interior. A similar compositional gradient could be established along thickness I-4, moving from the exterior to the interior. In this manner, the CTE of the niobium silicide composition can be substantially balanced through the thickness of the walls.

Moreover, the niobium silicide composition could be graded to match the CTE of one or more coatings which are applied over the turbine blade, or over a portion thereof. As those skilled in the art understand, the turbine blade is often protected by a thermal barrier coating (TBC), e.g., a ceramic coating formed from materials like yttria-stabilized zirconia. Bond coatings are often deposited between the TBC and the surface of the turbine blades. Non-limiting examples of the bond coats include materials made from Cr-Al-Ru alloys, disilicides, or Si-Ti-Cr-Nb alloys.

Stresses may develop between the protective coatings and the turbine blade surface at the elevated, operating temperatures for the turbine, and/or during exposure of the blade to the temperature cycling mentioned previously. These stresses can eventually compromise the integrity of the coatings and their adhesion to the blade surface. Thus, the composition of the niobium silicide material through sidewalls 21 and 23 could be graded (fully or partially), to minimize stress which might develop between the turbine blade surface and any of the coatings deposited thereon.

There are other reasons for compositionally grading the thickness of one or both of the sidewalls. For example, grading can be carried out to modify the oxidation resistance characteristics of the sidewalls. The most appropriate grading scheme to take advantage of properties like oxidation resistance can be determined by those skilled in the art, without undue experimentation.

The degree to which the composition is changed across each airfoil wall thickness will of course depend on the factors described previously, with thermal considerations being most important for CTE. Many variations are possible, as well. For example, sidewall 21 and sidewall 23 need not be graded in a manner similar to each other. (In fact, one could be graded, while the other might not be graded). Moreover, the gradients represented by I-3 and I-4 need not be generally perpendicular to the edges of the walls, as they are shown in FIG. 2. Furthermore, the grading does not have to continue through the entire thickness of each wall. In fact, the walls need not be "graded" at all, as defined herein. Instead, one particular niobium silicide composition might be present at one "layer" (i.e., a vertical "slice") of the wall along dimensions 1-3 and 1-4, while one or more different niobium silicide compositions might be present in other "layers", without any ordered gradation.

As mentioned above, turbine blades like those depicted in FIG. 1 can be made by a variety of techniques. They include forging, investment casting, machining, and combinations of these techniques. In some preferred embodiments, the turbine blades of this invention are made by a laser cladding process. Such a process is generally known in the art, and sometimes referred to as "laser welding". Non-limiting examples of the process are provided in the following U.S. Patents, which are incorporated herein by reference: 6,429,402 (Dixon et al); 6,269,540 (Islam et al); 5,043,548 (Whitney et al); 5, 038,014 (Pratt et al); 4,730,093 (Mehta et al); 4,724,299 (Hammeke); and 4,323,756 (Brown et al). Information on laser cladding is also provided in many other references, such as "Deposition of Graded Metal Matrix Composites by Laser Beam Cladding", by C. Thieler t al., BIAS Bremen Institute (10 pages), at http://www.bias.de/aboutus/structure /Imb/Publikationen/Deposition%20of%20graded.pdf (undated, with June 2005 website address).

In general, laser beam cladding processes typically involve the feeding of a consumable powder or wire into a melt pool on the surface of a substrate. The substrate is usually a base portion of the article to be formed by the process. The melt pool is generated and maintained through the interaction with the laser beam, which provides a high-intensity heat source. As described by C. Thieler et al, the substrate is scanned relative to the beam. As the scanning progresses, the melted substrate region and the melted deposition material solidify, and a clad track is deposited on the surface. A layer is successively formed by tracks deposited side-by-side. Multilayer structures are generated by depositing multiple tracks on top of each other.

A particular advantage in regard to the laser beam cladding process relates to the relatively small heat-affected zone (HAZ) during deposition. The small HAZ minimizes the thermal impact or stress on the substrate during the initial deposition, and on the component during the subsequent deposition of layers. Moreover, the rapid cooling of the melt pool (as mentioned below) can result in the formation of very fine microstructural features for the article being fabricated.

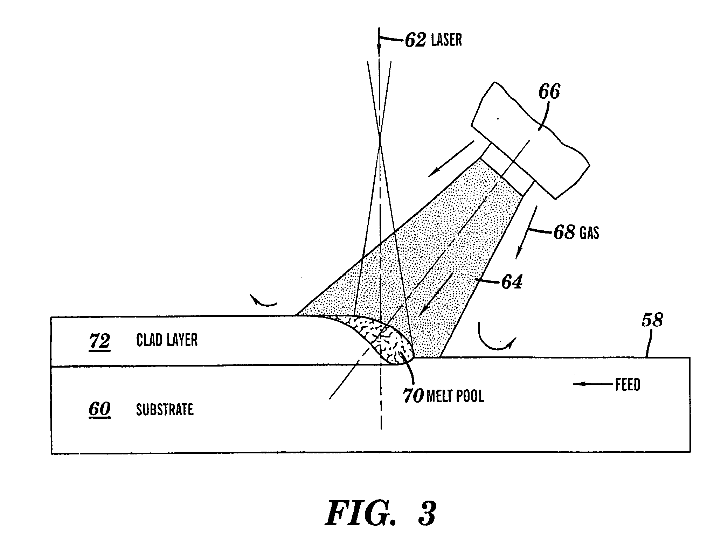

FIG. 3 is a simple illustration setting forth the general principles of a laser cladding process. Formation of a desired article is taking place on surface 58 of substrate 60. Laser beam 62 is focused on a selected region of the substrate, according to conventional laser parameters described below. The feed material (deposition material) 64 is delivered from powder source 66, usually by way of a suitable carrier gas 68. The feed material is usually directed to a region on the substrate which is very close to the point where the energy beam intersects substrate surface 58. Melt pool 70 is formed at this intersection, and solidifies to form clad track 72. Multiple clad tracks deposited next to each other form a desired layer. As the deposition apparatus is incremented upwardly, the article progresses toward completion in 3-dimensional form.

As further described below, deposition of the feed material can be carried out under computerized motion control. One or more computer processors can be used to control the movement of the laser, the feed material stream, and the substrate. The processors can also control the composition of the feed material. In this manner, a particular niobium silicide composition can be provided for designated regions of the turbine blade. Moreover, the composition can be compositionally graded, as described previously. In general, computer-controlled laser cladding according to this aspect of the invention usually begins with an analysis of the turbine blade as being an assembly of sections or "slices" which are substantially parallel to each other. The article is then uniquely defined by specifying the pattern of each section, i.e., its shape and size, and the position of each section, in relation to the adjacent sections.

More specifically, those skilled in the art of computer-aided design (e.g., CADCAM) understand that the desired turbine article can initially be characterized in shape from drawings, or from an article previously formed by conventional methods such as casting, machining, and the like. Once the shape of the part is numerically characterized, the movement of the part (or equivalently, the deposition head) is programmed for the laser cladding apparatus, using available numerical control computer programs. These programs create a pattern of instructions as to the movement of the part during each "pass" of the deposition implement, and its lateral displacement between passes. The resulting article reproduces the shape of the numerical characterization quite accurately, including complex curvatures and hollow regions of an airfoil or the like. U.S. Patent 5,038,014, referenced above, describes many other details regarding this type of deposition technique. U.S. Patents 6,429,402 and 6,269,540, are also instructive in this regard.

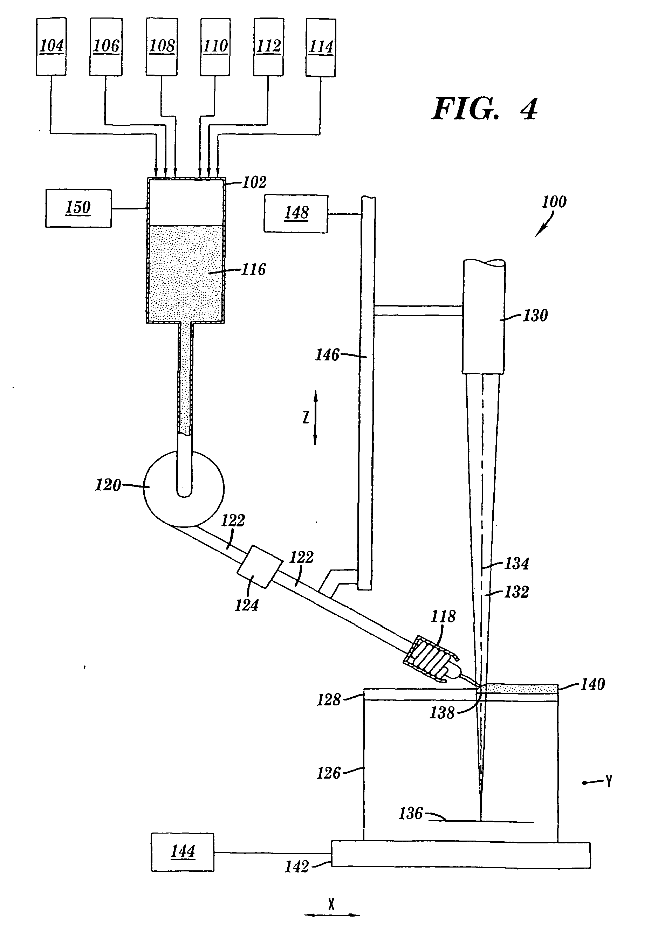

FIG. 4 is a general illustration of one type of laser cladding apparatus which is suitable for embodiments of this invention. Apparatus 100 includes a feed material reservoir 102. Reservoir 102 can be supplied by a number of powder supply chambers (hoppers) 104, 106, 108, 110, 112, and 114. Each supply chamber can be filled with a single element, a compound (e.g., a binary compound), or an alloy which may be used to form various niobium silicide compositions. While six supply chambers are illustrated, the number could be more or less than six, depending on the particular composition used to form a portion of the turbine blade. Each supply chamber can be connected to reservoir 102 by conventional conduits used for powder flow.

Conventional powder delivery systems often entrain the powder-particulate in a gas stream, e.g., an inert gas carrier which can be delivered from a separate gas supply source. (In addition to assisting in powder transport, the inert gas can also function to maintain powder in reservoir 102 under pressure). Details regarding such gas systems need not be included here. Reservoir 102 can be heated (e.g., by heating coils), so as to minimize moisture content in the powder supply.

Various mechanisms are available for carrying feed material 116 to powder delivery nozzle 118. As a non-limiting example, a conventional powder feed wheel 120, which is commercially available, could be employed. Alternatively, many other types of volumetric feeders are available, e.g., auger mechanisms, disc mechanisms, and the like. The powder wheel is cooperatively attached to conduit 122, which carries feed material 116 to delivery nozzle 118. Vibrating device 124, which can be in the form of a variety of mechanisms, is associated with conduit 122. The vibrating device inhibits powder particles moving through the conduit from adhering to its walls.

Conduit 122 terminates in the powder delivery nozzle 118 (sometimes referred to herein as the "powder head"). The powder head (usually assisted by a pressurized, inert gas) directs the powder to an upper surface of substrate 126, or to the surface of a previously-deposited layer 128. The shape and size of the powder head can vary to a great extent. The powder head can also be formed from a variety of materials, such as copper, bronze, aluminum, steel, or ceramic materials. As described in U.S. Patent 5,038,014, the powder head is usually fluid cooled, as by water, to enhance uniform flow of the powder. Fluid cooling also prevents the powder head from heating excessively as the laser beam passes through the head, or as energy from the melt pool ("weldpool") is reflected back toward the powder head.

Apparatus 100 further includes a laser 130. The laser emits a beam 132, having a beam axis 134. A wide variety of conventional lasers could be used, provided they have a power output sufficient to accomplish the melting function discussed herein. Carbon dioxide lasers operating within a power range of about 0.1 kw to about 30 kw are typically used, although this range can vary considerably. Non-limiting examples of other types of lasers which are suitable for this invention are Nd:YAG lasers, fiber lasers, diode lasers, lamp-pumped solid state lasers, diode-pumped solid state lasers, and excimer lasers. These lasers are commercially available, and those skilled in the art are very familiar with their operation. The lasers can be operated in either a pulsed mode or a continuous mode.

Laser beam 132 usually has a focal plane 136 beneath the substrate surface. The focal plane is calculated to provide a selected beam spot 138 at the surface of the substrate. The size of the beam spot is usually in the range of about 0.2 mm to about 5 mm in diameter. However, the size can vary considerably, and may sometimes be outside of this range. The laser energy is selected so as to be sufficient to melt a pool of material generally coincident with the beam spot 138. Usually, the laser energy is applied with a power density in the range of about 10³ to about 10⁷ watts per square centimeter.

As mentioned above, the layers of material are usually deposited by feeding powder 116 through conduit 122 into the molten pool at the beam spot 138. As relative lateral movement is provided between the laser beam spot and the article carrying its superimposed powder, progressive melting, cooling and solidification of the molten interaction zone occurs, producing a "bead" or layer. FIG. 4 depicts the first layer 128 of deposited material, while deposition of the next layer 140 is in progress. The angle at which the powder is fed can vary considerably, and is usually in the range of about 25°- 70°, relative to the article surface. Those skilled in the laser deposition arts will be able to readily adjust the powder delivery angle to suit a particular situation, based on factors known in the art.

As shown in FIG. 4, the substrate 126 can be supported on a movable support 142. Support 142 can move the substrate in two linear directions: the "X" direction (both X and -X), and the "Y" direction (both Y and -Y, out of the plane of the illustration of FIG. 4). By controlling the combination of the X and Y direction-movement of support 142, while maintaining conduit 122 and laser 130 at a constant height, a well-defined layer can be deposited on the substrate, having the precise pattern (shape) for that particular section of the turbine blade.

In most instances, movement of support 142 along the first linear axis X and the second linear axis Y is carried out by some form of computerized motion control, e.g., using processor 144. A wide variety of computer-control systems can be employed. Most of them typically employ a CAD/CAM interface in which the desired pattern of movement is programmed.

Moreover, support table 142 can be used in conjunction with one or more additional support platforms, to further increase the directions in which support 142 (and substrate 126) can be manipulated. For example, the support platforms could be part of a complex, multi-axis computer numerically controlled (CNC) machine. These machines are known in the art and commercially -available. The use of such a machine to manipulate a substrate is described in a co-pending application for S. Rutkowski et al, S.N. 10/622,063, filed on July 17, 2003, and incorporated herein by reference. As described in S.N. 10/622,063, the use of such a machine allows movement of the substrate along one or more rotational axes, relative to linear axes X and Y. As an example, a conventional rotary spindle (not shown in FIG. 4) could be used to provide rotational movement.

As shown in the example of FIG. 4, the conduit 122 and laser 130 are rigidly supported on an apparatus support 146. The support is movable in the vertical "Z" direction (and the -Z direction), as shown in the figure. In this manner, conduit 122 and laser 130 can be raised or lowered.

In some examples, apparatus support 146 can be controlled by a processor 148, which can function cooperatively with processor 144. In this manner, support 146 and support 142 can be moved in at least three dimensions, relative to the article being formed. For example, by controlling the combination of the X- and Y-direction movement of support 142, while maintaining conduit 122 and laser 130 at a constant "Z" height, a well-defined layer can be deposited on the substrate. The layer, e.g., layer I40, would conform to the pattern required for that particular section of the turbine blade. (As those skilled in the art understand, the same type of X, Y, and Z movement could be carried out by manipulating support 142 in the Z direction, while manipulating support 146 in the X and Y direction).

As depicted in FIG. 4, as one layer is deposited, e.g., layer 128, the apparatus 100 is incremented upwardly. As the apparatus is raised, conduit 122 and laser 130 are also raised, by an amount chosen to be the height or thickness of second layer 140. In this manner, layer 140 can be formed, overlying layer 128. (Again, FIG. 4 illustrates the deposition process at a stage when first layer 128 has been completely deposited, and second layer 140 is partially deposited). As layer 140 is deposited, an upper portion of layer 128 is usually re-melted. In this manner, the mixing and structural continuity of the adjacent layers is ensured.

As mentioned above, the selected niobium silicide composition for a particular region of the turbine blade is provided by some combination of feed material from one or more of the supply chambers (elements 104 to 114). As a non-limiting example, the six chambers illustrated might contain, respectively, Nb, Si, Hf, Cr, Al, and Ti. (Additional chambers could be added for additional elements or element-blends). Conventional tubes or conduits can connect each chamber to feed material reservoir 102. Various types of volumetric feeders like those mentioned above could be used for each chamber. The powder can be gravity-fed to reservoir 102, and/or can be carried through with a carrier gas. Reservoir 102 can include conventional devices for mixing the various elements and alloys, and for minimizing the amount of moisture retained therein. The reservoir can also include machined features or shapes which ensure that the various powders can be readily combined to yield the desired composition.

Many techniques can be used to vary the powder blend within or between successive layers of deposit. For example, one can apportion the powder between each hopper/chamber 104-114 in FIG. 4, by modifying the rotational speed of a powder feed wheel or disc (not specifically shown) which is associated with each hopper. (As noted above in reference to feed wheel 120, many alternatives to the wheel are possible, e.g., similar-functioning augers or disks). Alternatively, a conventional powder splitter could be employed, which also effectively apportions the amount of powder flowing from each hopper.

With continued reference to FIG. 4, processor 150 is depicted in association with reservoir 102. In general, this processor (or group of processors) functions to coordinate the supply of powder elements or alloys from the various hoppers/supply chambers to the reservoir. Thus, processor 150 can function in conjunction with processors 148 and 144. Coordination of all of the processors is based on the multi-axial movement of the substrate; its location and position at a particular point in time (i.e., the number of layers which have been formed over the substrate), and the pattern of computerized instructions which provide the specific composition for the next layer or set of layers in forming the turbine component.

As those skilled in the art understand, a processor like element 150 may refer, collectively, to a number of sub-processors. Moreover, it may be possible that all of the processors (144, 148, and 150) featured in FIG. 4 can be combined, e.g., their functions would be handled by a single processor. Those skilled in the arts, e.g., with a working knowledge of CNC systems and powder deposition, will be able to devise the best control system for a given situation, without undue effort.

Other details regarding a typical laser cladding process, using an apparatus like that of FIG. 4, are provided in various references, such as U.S. Patent 5,038,014. As a non-limiting example, a compressor blade, integral with a substrate, could be formed, using a 3 kW carbon dioxide laser. The laser beam could be focused on a spot diameter of 0.356 cm on the substrate surface, to provide a power density of about 30 kW per square centimeter. The substrate surface and surrounding area could be maintained in an inert atmosphere (e.g., argon) during deposition. The powder delivery system would be substantially as depicted in FIG. 4. A typical niobium silicide powder which is directed to the feed conduit might have an average particle size of about 35 microns to about 180 microns. The powder could be directed to the substrate surface at a rate of about 10 grams per minute. The height of each "bead" or layer formed would be about 0.015 inch (0.038 cm). To fabricate a blade having a length of about 3 inches (7.6 cm), a total of about 200 passes may be required, under these operating conditions. A typical linear traverse rate of the substrate, relative to the laser beam, might be about 50 inches (127 cm) per minute, as the feed powder is deposited.

Many variations are possible in regard to the laser and powder delivery systems for a laser cladding process. In general, they are all within the scope of this invention, and need not be described in detail here. As one example, various types of concentric feed nozzles could be employed. One such type is described by Hammeke in U.S. Patent 4,724,299, referenced above. Hammeke describes a laser spray nozzle assembly , in which a laser beam passageway extends vertically through the housing of a nozzle body. The housing includes coaxial openings through which the laser can pass. A separate powder delivery system supplies powder from a direction perpendicular to the laser beam passageway, to an annular passage which communicates with the passageway. In this manner, the feed powder and the laser beam can converge at a common location. As in other laser cladding systems, a melt pool is formed on an underlying work-piece, in a surface region coincident with the convergence of the laser beam and powder stream.

Another possible alternative relates to the manner in which the feed powder is delivered. In some preferred cases, the powder is fed into the melt pool on the substrate surface by multiple feed nozzles. For example, about 2 to 4 nozzles could be spaced equally around the circumference of the surface region at which deposition is taking place. Each nozzle could be supplied from a source similar to reservoir 102 in the example of FIG. 4.

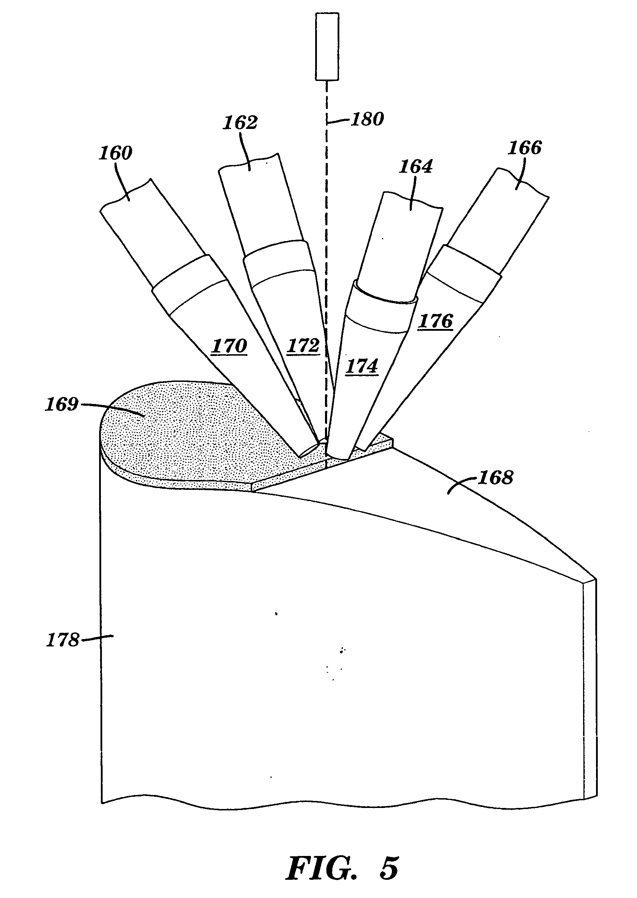

FIG. 5 depicts (in simplified form) powder delivery tubes 160, 162, 164 and 166, as part of a laser cladding system. Each tube terminates with a powder nozzle 170, 172, 174 and 176 (respectively). The nozzles surround the surface 168 of a turbine airfoil 178 which is being formed by a laser cladding process. A laser beam 180 is directed downwardly, to a point on surface 168 which is surrounded by the powder nozzles. (Layer 169 has been partially formed). Many of the other parameters regarding powder delivery and the like are similar to those discussed in previous cases. While each of the powder nozzles are depicted as being identical, their size and shape can vary, depending in part on deposition parameters. For example, one or more of the nozzles might have a smaller diameter at its tip.

The use of multiple powder nozzles allows deposition of the niobium silicide feed material from a variety of directions. In some cases, this causes the material "build-up" to become more uniform, as compared to deposition from a single direction. In turn, greater uniformity and consistency in the melting and subsequent solidification of each layer being deposited can result in a more uniform microstructure for the completed turbine article.

A variety of processes can be undertaken after fabrication of the turbine component by the laser cladding process. For example, machining steps can be used to attain or modify the precise geometric shape for the component. Examples of the machining techniques include electro-discharge machining (EDM), milling, and grinding. Polishing steps are also frequently undertaken. Moreover, conventional isostatic pressing operations can be used, e.g., to eliminate or minimize internal porosity in the component material. Appropriate heat treatments can also be performed on the article, for sintering, consolidation, and the like. In general, the use of the laser cladding process described herein can reduce the time required for many of these post-fabrication steps, as compared to turbine articles formed from conventional forging or casting operations.

As mentioned previously, turbine components, according to the present invention, comprise at least about 75 weight % of a niobium silicide composition. The balance of the composition can thus include other materials.

The apparatus described in FIG. 4 is very suitable for making a blisk, such as that depicted in FIGS. 1-5 of the Pratt et al patent. As mentioned previously, the desired shape for the blisk is initially characterized in a section-by-section manner. The article is then reproduced, layer upon layer, according to the computer-driven laser system. Furthermore, blisks formed from the niobium silicide compositions can be compositionally graded throughout all or part of their structure. In this manner, each section of the component is provided with the most suitable composition for a given operating environment. Moreover, damaged blade portions of the blisks can be readily prepared by the laser cladding process (as described below), without having to take more drastic steps, like scrapping the entire blisk.

The present invention can also be used to modify pre-existing turbine components formed from niobium silicide materials (see claim 11). As a non-limiting example, the surface of a turbine blade which is otherwise functional could be built up with a wear-resistant material, via the laser cladding process, to satisfy a more demanding service environment. Moreover, a combination of laser cladding steps and machining steps could be used to modify the shape of a turbine component, to suit a particular need.

While the articles and methods of various embodiments of this invention have been described in detail for the purpose of illustration, this description should not be construed as being limiting in any way. The claims are intended to cover all changes and modifications within the scope of these teachings as defined in the attached claims.
- 10: Turbine blade
- 12: Airfoil
- 14: Pressure side of airfoil
- 16: Suction side of airfoil
- 18: Leading edge
- 20: Trailing edge
- 21: Sidewall
- 22: Base of airfoil
- 23: Sidewall
- 24: Platform
- 25: Top surface of platform
- 26: Dovetail root
- 31: Airfoil tip
- 32: End cap
- 34: Cooling holes
- 35: Top edge
- 40: Upper portion of dovetail root
- 42: Lower portion of dovetail root
- 58: Substrate surface
- 60: Substrate
- 62: Laser beam
- 64: Feed material
- 66: Powder source
- 68: Carrier gas
- 70: Melt pool
- 72: Clad track
- 100: Apparatus
- 102: Feed material reservoir
- 104: Powder supply chamber
- 106: Powder supply chamber
- 108: Powder supply chamber
- 110: Powder supply chamber
- 112: Powder supply chamber
- 114: Powder supply chamber

- 116: Feed material (powder)
- 118: Powder delivery nozzle
- 120: Powder feed wheel
- 122: Conduit
- 124: Vibrating device
- 126: Substrate
- 128: Layer of deposited material
- 130: Laser
- 132: Laser beam
- 134: Laser beam axis
- 136: Focal plane
- 138: Beam spot
- 140: Layer of material
- 142: Movable support
- 144: Processor
- 146: Support
- 148: Processor
- 150: Processor
- 160: Powder delivery tube
- 162: Powder delivery tube
- 164: Powder delivery tube
- 166: Powder delivery tube
- 168: Surface of turbine airfoil
- 169: Layer
- 170: Powder nozzle
- 172: Powder nozzle
- 174: Powder nozzle
- 176: Powder nozzle
- 178: Turbine airfoil
- 180: Laser beam

## Claims

1. A turbine component (10) formed from a niobium silicide-based composition;
with at least 75 weight % of the material forming the component (10) comprises some form of niobium silicide composition, **characterised in that**:
the niobium silicide-based composition is compositionally-graded through at least a portion of the component;
the compositional grading of niobium silicide is a sequential or successive change in the amount of one or more constituents in the composition along a dimension of the turbine component (10);
at least a first portion (31) of the component (10) is compositionally-graded to exhibit greater oxidation resistance than an adjacent second portion (12) of the component (10), under standard operating conditions;
the component (10) comprises a turbine blade (10) comprising:
(a) an airfoil (12);
(b) an airfoil tip region (31) located at an outer end of the airfoil (12);
(c) a platform (24) on which the airfoil (12) is mounted; and
(d) a dovetail root (26) attached to an underside of the platform (24), and having a shape adapted to fit into a slot on a turbine rotor, so that the blade (10) can be attached to the rotor; and wherein the niobium silicide-based composition is a niobium silicide alloy and the composition of the niobium silicide alloy in the root portion (26) of the turbine blade (10) is different from the composition of the niobium silicide alloy in the tip portion (12) of the blade (10), whereby the niobium silicide alloy in the dovetail root (26) exhibits greater fracture toughness than the niobium silicide alloy in the airfoil (12), the amount of silicon present in the niobium silicide alloy in the dovetail root (26) being less than about 9 atom %, based on total atomic percent; and the alloy comprising a metallic Nb-base phase and at least one metal silicide phase of the formula M₃Si or M₅Si₃, wherein M is at least one element selected from the group consisting of Nb, Hf, Ti, Mo, Ta, W, a platinum group metal, and combinations thereof.

2. The turbine component (10) of claim 1, wherein at least a first portion (24, 26) of the component (10) is compositionally-graded to exhibit higher mechanical performance than an adjacent second portion (12) of the component, under standard operating conditions.

3. The turbine component (10) of claim 1, wherein the niobium silicide alloy in the airfoil tip region (31) exhibits greater oxidation resistance, wear resistance, or a combination of oxidation resistance and wear resistance, as compared to the niobium silicide alloy in the airfoil (12), under standard operating conditions.

4. The turbine component (10) of any one of claims 1 or claim 3, wherein the composition of the niobium silicide alloy is graded through at least one section of the blade (10), to provide a gradual transition between the alloy composition in one portion of the blade (10) to another portion of the blade (10).

5. The turbine component (10) of claim 4, wherein compositional grading is independently present in different sections of the blade (10).

6. The turbine component (10) of claim 5, wherein the composition of the airfoil (12) comprises a silicon-modified Laves phase, at a level less than that in the tip region (31).

7. The turbine component (10) of any one of claims 1, or 3 to 6, wherein the composition of the airfoil (12) comprises niobium (Nb), titanium (Ti), hafnium (Hf), chromium (Cr), aluminum (Al), and silicon (Si), and has a microstructure comprising a metallic niobium-base phase and a metal silicide phase.

8. The turbine component (10) of any one of claims 1 or 3 to 7, wherein the airfoil (12) comprises generally opposite sidewalls (21, 23), and at least a portion of the sidewalls (23,21) is compositionally graded.

9. The turbine component (10) of claim 8, wherein the sidewalls (21, 23) are compositionally graded to provide a coefficient of thermal expansion (CTE) which is substantially balanced through the thickness of the sidewalls (21,23) when the turbine blade (10) is exposed to standard operating conditions.

10. The turbine component (10) of claim 1 or claim 2, at least partially fabricated by a laser cladding process.

11. A method of modifying a turbine component (126) according to claim 1, comprising the step of applying additional material which comprises a niobium silicide to at least a portion of the turbine component (126), according to a designated pattern, so that the turbine component (126) is modified according to shape, composition, or a combination of shape and composition.

## Patentansprüche

1. Turbinenkomponente (10), die aus einer Niob-Silizidbasierenden Zusammensetzung hergestellt ist;
wobei wenigstens 75 Gewichtsprozent des die Komponente (10) ausbildenden Materials eine bestimmte Form einer Niob-Silizid-Zusammensetzung aufweisen,
**dadurch gekennzeichnet, dass**:
die Niob-Silizid-basierende Zusammensetzung über wenigstens einen Abschnitt der Komponente hinweg in der Zusammensetzung abgestuft ist;
die zusammensetzungsabstufung des Niob-Silizids eine sequentielle oder sukzessive Änderung in dem Anteil von einem oder mehreren Bestandteilen in der Zusammensetzung entlang einer Dimension der Turbinenkomponente (10) ist;
wenigstens ein erster Abschnitt (31) der Komponente (10) in der Zusammensetzung so abgestuft ist, dass er unter Standardbetriebsbedingungen eine größere Oxidationsbeständigkeit als ein benachbarter zweiter Abschnitt (12) der Komponente (10) zeigt;
die Komponente (10) eine Turbinenlaufschaufel (10) aufweist, mit:
(a) einem Schaufelblatt (12);
(b) einem Schaufelblattspitzenbereich (31), der sich an einem äußeren Ende des Schaufelblattes (12) befindet;
(c) eine Plattform (24), auf welcher das Schaufelblatt (12) befestigt ist; und
(d) einen Schwalbenschwanzfuß (26), der an einer Unterseite der Plattform (24) angebracht ist und eine Form besitzt, die für einen Sitz in einem Schlitz auf einem Turbinenrotor dergestalt angepasst ist, sodass die Laufschaufel (10) an dem Rotor angebracht werden kann; und wobei die Niob-Silizid-basierende Zusammensetzung eine Niob-Silizid-Legierung ist und sich die Zusammensetzung der Niob-Silizid-Legierung in dem Fußabschnitt (26) der Turbinenschaufel (10) von der Zusammensetzung der Niob-Silizid-Legierung in dem Spitzenabschnitt (12) der Laufschaufel (10) unterscheidet, wodurch die Niob-Silizid-Legierung in dem Schwalbenschwanzfuß (26) eine größere Bruchzähigkeit als die Niob-Silizid-Legierung in dem Schaufelblatt (12) zeigt, wobei der Anteil von in der Niob-Silizid-Legierung in dem Schwalbenschwanzfuß (26) vorhandenem Silizium kleiner als ca. 9 Atomprozent auf der Basis der Gesamtatomprozente ist; und die Legierung eine metallische Nb-Basisphase und wenigstens eine Metallsilizidphase mit der Formel M₃Si oder M₅Si₃ aufweist, wobei M wenigstens ein aus der aus Nb, Hf, Ti, Mo, Ta, W, einem Platingruppenmetall und Kombinationen davon bestehenden Gruppe ausgewählt ist.

2. Turbinenkomponente (10) nach Anspruch 1, wobei wenigstens ein erster Abschnitt (24, 26) der Komponente (10) in der Zusammensetzung so abgestuft ist, dass er unter Standardbetriebsbedingungen ein besseres mechanisches Verhalten als ein benachbarter zweiter Abschnitt (12) der Komponente zeigt.

3. Turbinenkomponente (10) nach Anspruch 1, wobei die Niob-Silizid-Legierung in dem Schaufelblattspitzenbereich (31) unter Standardbetriebsbedingungen eine bessere Oxidationsbeständigkeit, Verschleißbeständigkeit oder eine Kombination von Oxidationsbeständigkeit und Verschleißbeständigkeit im Vergleich zu der Niob-Silizid-Legierung in dem Schaufelblatt (12) zeigt.

4. Turbinenkomponente (10) nach einem der Ansprüche 1 oder 3, wobei die Zusammensetzung der Niob-Silizid-Legierung über wenigstens einen Teilbereich der Laufschaufel (10) abgestuft ist, um einen abgestuften Übergang zwischen der Legierungszusammensetzung in einem Abschnitt der Laufschaufel (10) zu einem anderen Abschnitt der Laufschaufel (10) zu erzeugen.

5. Turbinenkomponente (10) nach Anspruch 4, wobei eine Zusammensetzungsabstufung unabhängig in unterschiedlichen Teilbereichen der Laufschaufel (10) vorhanden ist.

6. Turbinenkomponente (10) nach Anspruch 5, wobei die Zusammensetzung des Schaufelblattes (12) eine Silizium-modifizierte Laves-Phase bei einer niedrigeren Höhe als der in dem Spitzenbereich (31) aufweist.

7. Turbinenkomponente (10) nach einem der Ansprüche 1, oder 3 bis 6, wobei die Zusammensetzung des Schaufelblattes (12) Niob (Nb), Titan (Ti), Hafnium (Hf), Chrom (Cr), Aluminium (Al) und Silizium (Si) aufweist und eine Mikrostruktur mit einer metallischen Niob-Basisphase und einer Metall-Silizid-Phase aufweist.

8. Turbinenkomponente (10) nach einem der Ansprüche 1, oder 3 bis 7, wobei das Schaufelblatt (12) im Wesentlichen gegenüberliegende Seitenwände (21, 23) aufweist, und wenigstens ein Teil der Seitenwände (23, 21) in der Zusammensetzung abgestuft ist.

9. Turbinenkomponente (10) nach Anspruch 8, wobei die Seitenwände (21, 23) in der Zusammensetzung so abgestuft sind, dass sie einen Wärmeausdehnungskoeffizienten (CTE) liefern, welcher im Wesentlichen über die Dicke der Seitenwände (21, 23) ausgeglichen ist, wenn die Turbinenlaufschaufel (10) Standardbetriebsbedingungen ausgesetzt ist.

10. Turbinenkomponente (10) nach Anspruch 1 oder Anspruch 2, die wenigstens teilweise durch ein Laserauftrags-Schweißverfahren hergestellt ist.

11. Verfahren zum Modifizieren einer Turbinenkomponente (126) nach Anspruch 1 mit dem Schritt der Aufbringung von zusätzlichem Material, welches ein Niob-Silizid aufweist, auf wenigstens einen Teil der Turbinenkomponente (126) gemäß einem angegebenen Muster, sodass die Turbinenkomponente (126) hinsichtlich Form, Zusammensetzung oder einer Kombination von Form und Zusammensetzung modifiziert wird.

## Revendications

1. Pièce (10) de turbine à composition à base de siliciure de niobium ;
au moins 75 % en poids de la matière qui forme la pièce (10) étant constitués par une forme de composition à base de siliciure de niobium, **caractérisée en ce que** :
la composition à base de siliciure de niobium présente une gradation de composition dans au moins une partie de la pièce;
la gradation du siliciure de niobium dans la composition est un changement séquentiel ou successif dans la quantité d'un ou de plusieurs constituants dans la composition, dans une dimension de la pièce (10) de turbine ;
au moins une première partie (31) de la pièce (10) présente une gradation de composition pour faire preuve d'une plus grande résistance à l'oxydation d'une seconde partie adjacente (12) de la pièce (10), dans des conditions de fonctionnement normales;
la pièce (10) est constituée par une aube mobile (10) de turbine, comprenant :
(a) une pale profilée (12) ;
(b) une région formant bout (31) de pale, située à une extrémité extérieure de la pale (12) ;
(c) une plate-forme (24) sur laquelle est montée la pale (12) ;
et
(d) une emplanture (26) à queue d'aronde fixée à une face inférieure de la plate-forme (24), et ayant une forme conçue pour se loger dans une fente d'un rotor de turbine, de façon que l'aube (10) puisse être fixée au rotor ; et dans laquelle la composition à base de siliciure de niobium est un alliage à base de siliciure de niobium et la composition de l'alliage à base de siliciure de niobium dans la partie formant emplanture (26) de l'aube de turbine est différente de la composition de l'alliage à base de siliciure de niobium dans la partie formant bout (12) de l'aube, à la suite de quoi l'alliage à base de siliciure de niobium de l'emplanture (26) à queue d'aronde présente une plus grande ténacité à la rupture que l'alliage à base de siliciure de niobium de la pale (12), la quantité de silicium présente dans l'alliage à base de siliciure de niobium de l'emplanture (26) à queue d'aronde représentant un pourcentage atomique inférieur à 9 % du total; et l'alliage comprenant une phase à base de Nb métal et au moins une phase de siliciure métallique à formule M₃Si ou M₅Si₃, M étant au moins un élément choisi dans le groupe constitué de Nb, Hf, T, Mo, Ta, W, un métal du groupe du platine et des combinaisons de ceux-ci.

2. Pièce (10) de turbine selon la revendication 1, dans laquelle au moins une première partie (24, 26) de la pièce (10) présente une gradation de composition, si bien qu'elle fait preuve de meilleures performances mécaniques qu'une seconde partie adjacente (12) de la pièce dans des conditions de fonctionnement normales.

3. Pièce (10) de turbine selon la revendication 1, dans laquelle l'alliage à base de siliciure de niobium de la région formant bout (31) de pale est amélioré en ce qui concerne sa résistance à l'oxydation, sa résistance à l'usure ou une combinaison de résistance à l'oxydation et de résistance à l'usure, en comparaison de l'alliage à base de siliciure de niobium de la pale (12), dans des conditions de fonctionnement normales.

4. Pièce (10) de turbine selon l'une quelconque des revendications 1 et 3, dans laquelle la composition de l'alliage à base de siliciure de niobium présente une gradation dans au moins une partie de l'aube (10), afin d'assurer une transition progressive entre la composition de l'alliage dans une première partie de l'aube (10) et une autre partie de l'aube (10).

5. Pièce (10) de turbine selon la revendication 4, dans laquelle la gradation de composition est présente d'une façon indépendante dans différentes parties de l'aube (10).

6. Pièce (10) de turbine selon la revendication 5, dans laquelle la composition de la pale (12) comporte une phase de Laves modifiée par du silicium, à un niveau inférieur à celui existant dans la région formant bout (31).

7. Pièce (10) de turbine selon l'une quelconque des revendications 1 et 3 à 6, dans laquelle la composition de la pale (12) comprend du niobium (Nb), du titane (Ti), de l'hafnium (Hf), du chrome (Cr), de l'aluminium (Al) et du silicium (Si), et a une microstructure comportant une phase à base de niobium métal et une phase de siliciure métallique.

8. Pièce (10) de turbine selon l'une quelconque des revendications 1 à 3 ou 7, dans laquelle la pale (12) comporte des parois latérales globalement opposées (21, 23), et au moins une partie des parois latérales (23, 21) présente une gradation de composition.

9. Pièce (10) de turbine selon la revendication 8, dans laquelle les parois latérales (21, 23) présentent une gradation de composition pour assurer un coefficient de dilatation thermique (CDT) sensiblement équilibré dans l'épaisseur des parois latérales (21, 23), quand l'aube (10) de turbine est soumise à des conditions de fonctionnement normales.

10. Pièce (10) de turbine selon la revendication 1 ou la revendication 2, fabriquée au moins partiellement par revêtement laser.

11. Procédé de modification d'une pièce (126) de turbine selon la revendication 1, comprenant l'étape d'application, sur au moins une partie de la pièce (126) de turbine, suivant un motif donné, de matière supplémentaire qui contient un siliciure de niobium, de façon que la pièce (126) de turbine soit modifiée quant à sa forme, sa composition ou une combinaison de sa forme et de sa composition.
